# EUROPEAN PATENT APPLICATION

(11) **EP 4 029 382 A1**
(43) Date of publication of application: **20.07.2022**
(21) Application number: 21151457.5
(22) Date of filing: 13.01.2021
(51) Int. Cl.: A23K 10/30, A23K 30/00, A23K 50/10, C13B 10/08

(54) **ENRICHED SUGARBEET FEEDSTUFF**

(71) Applicant: KWS SAAT SE & Co. KGaA, 37574 Einbeck (DE)
(72) Inventor: Ruano, César, 37574 Einbeck (DE); Utesch, Volker, 37574 Einbeck (DE); Bishop, Ben, Thriplow, SG 8 7 RE (GB); Ojeda Salas, Sebastián Jose, 140 Rancagua (CL)

(57) **Abstract**

The present invention relates to a process for making an animal feedstuff composition from a crop comprising Beta vulgaris plants or parts thereof and the animal feedstuff composition made by said process. Further, the invention encompasses a process for producing an enriched milk preferably containing a higher nutrient content, and a system for managing throughput in a production facility for processing a sugar-containing crop material.

## Description

*Beta vulgaris,* including sugarbeet varieties/plants, has been used as a feeding crop in dairy farming for a long time due to its advantageous feeding properties. The main advantage was the fact that historically it was the only winter forage available, as the techniques to ensile maize were unknown, hence so-called fodder beet was the way to feed the livestock across the autumn-winter months until the following spring when new grass would be again available.

The current options available to farmers are either (home-grown) fresh/ensiled *Beta vulgaris* or ready-made dried and/or pressed sugarbeet pulp from the sugar factories.

### BACKGROUND OF THE INVENTION

*Beta vulgaris* is an energy-rich crop typically having a desirable sugar content, but which imposes the burden of crop management and post-harvest operations on livestock farmers. Crop management of *Beta vulgaris* is more challenging compared to alternative forage crops such as maize. The main burden is crop establishment and weed control. Harvesting also requires specific machinery not always available. Depending on harvest conditions the roots will carry more or less soil (dirt tare), therefore either dry or wet cleaning would be necessary and afterwards chopping and mixing with another silage crop to ensile. Roots of *Beta vulgaris* typically have a dry matter (DM) of 20-30% which may not allow ensiling on its own as the water content is too high and thus another silage crop is usually necessary to increase the average DM content above 30% DM, otherwise a high-quality silage cannot be achieved. In addition, after chopping (after 24-48 hours) the beet root will release a lot of effluent - up to 35-40% of its weight. This effluent needs to be captured or absorbed, which is another reason another silage crop is also required to ensile beet. The alternative could be to harvest once a week for the use fresh beet, but this is laborious and not a very efficient process. In a practical case, either smaller harvesters owned by the growers to harvest once a week (to ensure good preservation of beet in the field) are used or the growers harvest all beets and put it on a clamp (aerobic conditions). However, this is not possible for all climate conditions and regions. Therefore, the use of fresh beet will always be restricted in certain limited geographic areas and for certain periods of time during the year. Accordingly, one of advantages enabled by the present invention is to provide a new concept to remove the burden of growing the crop for a livestock farmer (who normally has more focus on animals than on crops). Details will be provided in the following sections.

Sugarbeet co-products from the sugar factories, i.e. pressed beet pulp and dried pulp, are easy to use as feedstuff for animals, but are low in sugar content (typically between 1 - 5% sugar by weight). A typical sugar content of a fresh sugar beet is between about 10 to 20% by weight, which is however not all extractable. Wet pulp produced from the sugar beet has about 1% sugar by weight and pressed pulp obtained by mechanically pressing the wet pulp to remove water contains about 1 - 2% sugar by weight. Dried pulp obtained by the thermal drying of pressed pulp contains 4-5% sugar by weight. Some factories just produce pressed pulp, others just dried pulp, and many produce both. This depends on the distance between the sugar factory and livestock farmer.

The sugar beet co-products are in high demand among dairy farmers as they are readily digestible and rich in pectin, A highly digestible fiber delivers higher energy to the animal and better fermentation which results also in better rumen health. All these result in higher and more consistent milk production.

### Wet Pulp

Wet pulp from sugar beets is produced as a co-product of the sugar production process. After receiving and washing the beets in the factory, the sugar beets are cut into fine slices (cossettes) in a beet slicer or chopper. These cossettes are fed into a diffuser to circulate in a cross-current of hot water during the diffusion stage. The diffusion stage results in the production of raw juice, which is further processed downstream to produce sugar, and exhausted cossettes. At the exit of the diffusion, the exhausted cossettes contain a very small amount of sugar, typically around 1% sugar by weight or less.

After the diffusion, the exhausted cossettes, are referred to as wet pulp which contains about 5-10% of DM. The approximate composition of the dry matter content of the pulp includes 1-10% sugar (sucrose), 10-20% crude fiber, 10-25% pectin, 40% cellulose, 8% crude protein, and 6% ash.

Wet pulp has a high cellulose content as well as other digestible carbohydrates (hemicellulose and pectin for example). Its content in lignin is very low, so that it confers a good digestibility of its organic matter and a good energy value, which is superior to the one of a maize silage.

### Pressed pulp

Pressed pulp obtained by mechanically pressing the wet pulp can be delivered either in bulk or in bales. The pressed pulp typically contains about 20-30% DM after removal of water.

### Dried pulp

The pressed pulp can be further processed to produce dried pulp having typically 85-95% DM. Different drying methods can be used to remove water thermally using rotary, tray or belt driers, such as direct high temperature drying using fossil fuels, low temperature drying using fossil fuels or waste heat and steam drying as well as solar drying. Some factories just produce pressed pulp, others just dried pulp, and many produce both. This depends in many cases on the logistics of supplying the livestock farmers.

The dried pulp is normally sold in pellets which are easy to store and can be transported along large distances, and even by sea freight.

### Pectin

Sugarbeets have a unique fiber composition compared to other crops, notably the pectin content (typically 10-25% of the dry matter). Pectin is highly digestible and degraded slowly and continuously in the rumen, in which energy is supplied over long period.

With slower fermentation, the pH of the animal's rumen does not change significantly, staying at about pH 6, thereby reducing the risk of acidosis.

Pectin provides favorable conditions to fiber degradation microbes (which are not very acid tolerant). Furthermore, pectin stimulates microbial protein synthesis and lower milk urea levels. Thus, pectin is an ideal component of starch- or sugar-rich feedstuffs due to the fermentation pattern and the resulting rumen synchronization. Feedstuff including pectin has a positive effect on milk protein, based on better rumen fermentation by optimizing the rumen function.

### SUMMARY OF THE INVENTION

The present invention is directed to a process of making an animal feedstuff composition comprising the steps of: providing a crop comprising *Beta vulgaris* plants or *Beta vulgaris* varieties having a dry matter content greater than about 18% by weight; cutting the crop into pieces; conveying the pieces into a diffusion apparatus to produce a fluid and a pulp, said pulp comprising sugar at about 20-60% by weight of the dry matter of the pulp; removing the pulp from the diffusion apparatus; and processing the pulp to form the feedstuff composition. After removing the pulp from the diffusion apparatus, the pulp may be pressed to form a pressed pulp. The pressed pulp may be dried to form a dried pulp, and the dried pulp may be used directly in the form of shreds, or the dried pulp may be further processed into pellets.

The process may comprise the step of analyzing the crop to determine a sugar concentration of the crop. The sugar concentration of the crop may be determined by spectrometry. The spectrometry may be performed by a spectroscopic method selected from the group consisting of: infrared spectroscopy; mid-infrared spectroscopy; near infrared spectroscopy; Raman spectroscopy; hyperspectral imaging; refractometry; polarimetry; and a combination thereof. The sugar concentration of the crop may be determined after cutting the crop into pieces.

The analysis described above may also or alternatively be used to analyze the pulp to determine a sugar concentration of the pulp.

The present invention is further directed to an animal feedstuff composition made by the process described above. The dry matter content of the feedstuff composition may be between about 5 and 95% by weight, or between about 30 - 85% by weight. The sugar content of the feedstuff composition may be between about 0 and 60% by weight, or between about 0 and 30% by weight. The feedstuff composition may further comprise a nutritional component, which may be a digestible fiber including pectin. The ratio of the sugar to the pectin in the feedstuff composition may range from about 1 to about 100% by weight.

The present invention is additionally directed to a process for producing an enriched milk, comprising feeding the animal feedstuff composition to a milk-producing animal, and thereafter obtaining milk from the animal. The milk from the animal may contain a higher nutrient content compared to a milk from an animal who has not been fed the feedstuff, wherein the higher nutrient content is selected from the group consisting of: a higher fat content, a higher protein content, and a combination thereof.

The present invention is also directed to an animal feedstuff composition comprising from about 5% to about 95% processed *Beta vulgaris* dry matter, wherein the dry matter comprises from about 0% to about 60% sugar. As used herein, "processed *Beta vulgaris* dry matter" shall mean dry matter that is produced by processing the crop through an apparatus, as contrasted with directly feeding fresh or raw unprocessed *Beta vulgaris* crops to an animal. The dry matter of the feedstuff composition may comprise from about 0% to about 100% by weight digestible fiber. The digestible fiber may comprise from about 0% to about 100% by weight pectin. The ratio of the sugar to the pectin in the feedstuff composition may range from about 1 to about 100% by weight. The feedstuff may be used to produce an enriched milk, by feeding the feedstuff to a milk-producing animal, and obtaining milk from the animal. The milk from the animal may contain a higher nutrient content compared to a milk from an animal who has not been fed the feedstuff, wherein the higher nutrient content is selected from the group consisting of: a higher fat content, a higher protein content, and a combination thereof.

The present invention is further directed to a system for managing throughput in a production facility for processing a sugar-containing crop material, comprising a first detection apparatus to detect a dry matter content and sugar content of the crop material; a second detection apparatus in communication with a fluid-based diffusion apparatus to detect a processed sugar content of the fluid within the diffusion apparatus when the crop material is in the diffusion apparatus, said diffusion apparatus having at least a plurality of operational modes; a controller for controlling the operation of diffusion apparatus in each operational mode; and a memory and processor configured to: (i) receive the dry matter content and the processed sugar content from the first and second detectors; (ii) compare the dry matter content and the processed sugar content; (iii) generate a comparison value; (iv) determine whether the comparison value meets a threshold processed sugar yield target; and (v) transmit a signal to the controller for maintaining or changing the operational mode of the diffusion apparatus based on the determination step (iv).

The first detection apparatus in the system may comprise a measurement apparatus for measuring a raw sugar content of the crop material. The measurement apparatus may use spectrometry to measure the raw sugar content. The spectrometry may be done by a spectroscopic method selected from the group consisting of: infrared spectroscopy; mid-infrared spectroscopy; near infrared spectroscopy; Raman spectroscopy; hyperspectral imaging; refractometry; polarimetry; and a combination thereof.

The system may include a third detection apparatus configured to detect a protein, fiber or other non-sugar component of the pulp produced in the diffusion apparatus.

The system may include a second processor to generate the threshold processed sugar yield target. The second processor may be configured to receive a weight input indicating the quantity of the crop material; receive the dry matter content and sugar content from the first detection apparatus; and determine the threshold processed sugar yield target based on the weight input and the dry matter content.

### BRIEF DESCRIPTION OF THE DRAWINGS

Reference will now be made to the accompanying drawings, which are not necessarily drawn to scale, and which are incorporated into and constitute a portion of this disclosure, illustrate various implementations and aspects of the disclosed technology and, together with the description, explain the principles of the disclosed technology. In the drawings:
FIG. 1 is a diagram of an embodiment of a sugar factory process model, in which the definition of technical terms and definitions are provided.
FIG. 2 is a schematic representation of an embodiment of a sugar factory process model.
FIGS. 3A and 3B are schematic representation of an embodiment of a sugar factory process model, in which steps the modifications are required (indicated in blue numbered circles).

### DETAILED DESCRIPTION

In one aspect of the present invention, an enriched beet pulp is provided.

In another aspect of the present invention, enriched beet pulp according to the present invention is used as animal feedstuff, which may also be known as feeding material, feed, raw material, ingredient, by- product, and co-product.

In a further aspect of the present invention is creating and establishing a sugar-rich animal - particularly dairy -- feeding alternative based on partially extracted, non-exhausted sugar beet cossettes or other fine pieces.

The product according to the present invention is suitable for feeding beef and dairy cattle and other livestock like buffalo, sheep, goats and pigs and the like as well as poultry.

The cossette form of cut beets is used in an industrial sugar extraction process. It is the result of slicing the beets and has a particular form to enhance and ease the sugar extraction process. Although they can vary slightly on size, they are pretty similar across different factories. For the sugar industry slicing cossettes is common practice. These are optimized to provide a large surface area for diffusion combined with mechanical strength for pressing to remove water.

However, the form of the sugar beet used to make the feed according to the present invention is not limited to cossettes. Other forms of cut sugar beets include sliced, chopped, shredded, and the like. One aspect of the present invention is providing a sugar-rich animal feeding alternative which is easy to use, highly nutritious as well as palatable, and results in better milk quality.

Milk quality refers to the improved/enhanced content of milk solids such as fat and protein. Feeding sugar rich products, such as the enriched sugar beet feedstuff described herein, provides the animal with the nutritional and dietary support needed to produce higher quality milk. The nutritional profile of the feedstuff is based on primarily sugar, which provides energy content as an alternative to starch. Both are carbohydrates and can be used by the animal as energy source to produce milk or to gain weight, but they are different and complementary. The animal needs both sources of energy. Also, fiber is an important element of feedstuff to ensure stable gut or rumen health. Sugar beet pectin, being highly digestible, helps to support the animal's overall health. The feedstuff of the present invention provides ease of use. As an example, the dairy farmer receives a product ready to use fresh directly into the TMR mixer (TMR: total mixed ration) to formulate the daily ratio to feed the cows or to be ensiled. "TMR" means a well-mixed and complete dairy diet. TMR's are properly prepared using a Mixer-Wagon. Many times, farmers use just the name "Unifeed" to name the mixing machinery. The farmer therefore is released of the burden of growing *Beta vulgaris,* which is a highly technical crop that requires attention to detail and is more challenging to grow than maize or other alternative crops. If crop management for *Beta vulgaris* is more complex than alternatives like maize, harvest and post-harvest operations are far more complex too. At the end, it is easier for the farmer to get access to a sugar-rich feeding product by using the enriched beet feedstuff of the present invention.

In one aspect of the present invention, the amount of pectin is in the range 0-100% by weight of enriched pulp.

In another aspect of the invention, the amount of sugar (sucrose and different polysaccharides) is in the range of 4 to 18% by weight of the enriched beet feedstuff.

The present invention further provides a new market segment for value-added animal feed product, which provides the flexibility to process sugar beets into different products to optimize resource use, improve throughput, and respond to changing market demands, harvest quality or storage conditions. One aspect of the invention is to introduce a new type of sugar beet feeding product, in which instead of extracting sugar from the beet at typical levels, increases the amount of sugar in the pressed pulp to the range of 4-18% by weight. This enriched pulp would then be distributed to the customers via existing formats and distribution channels.

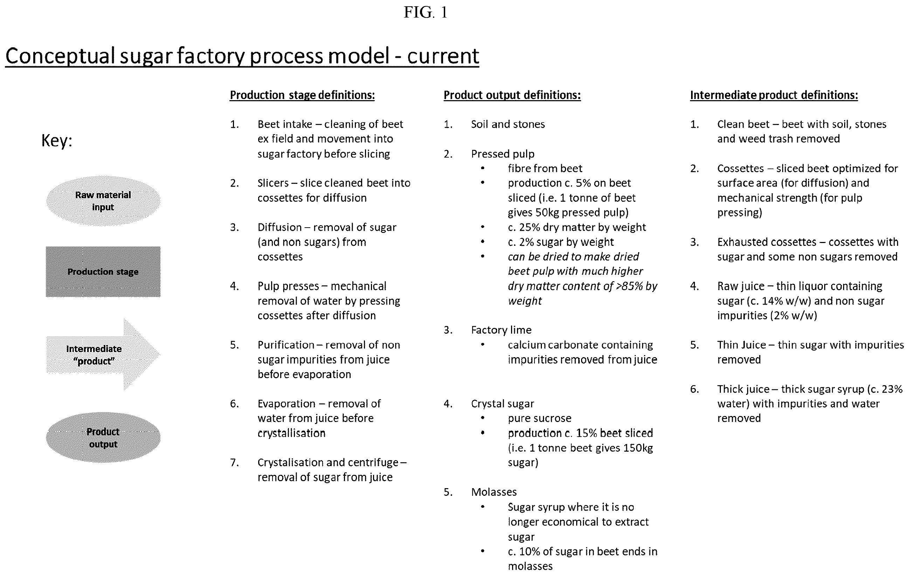

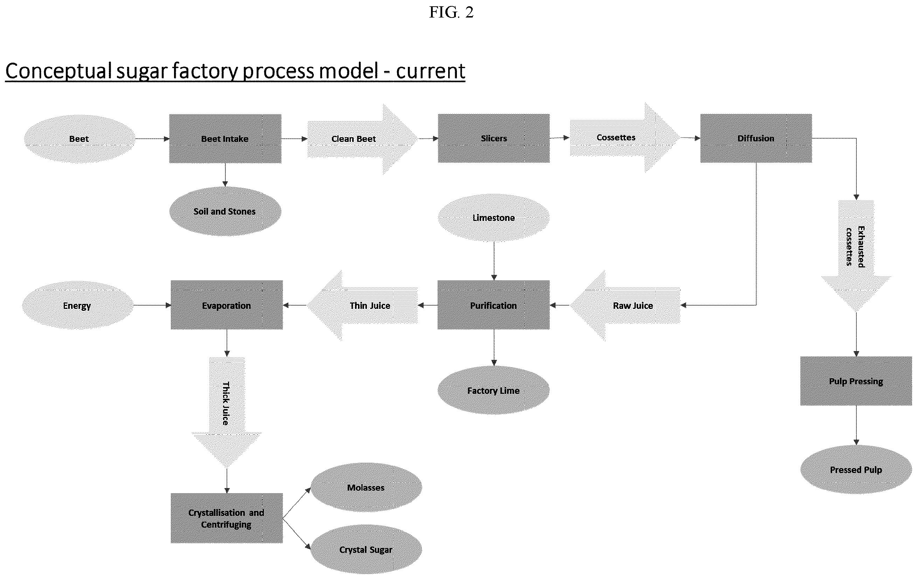

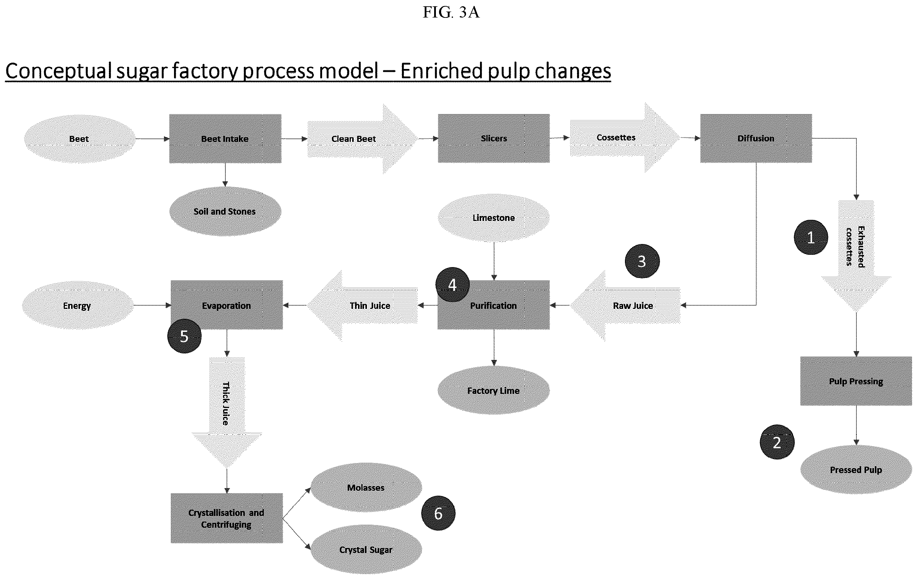

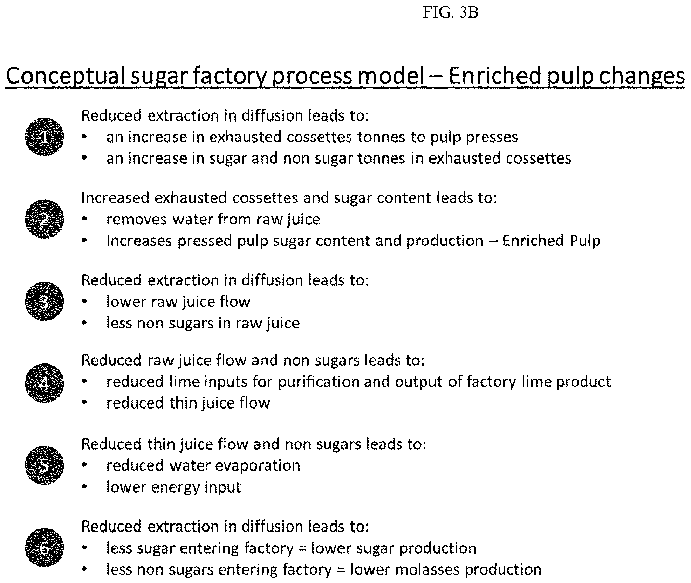

The present invention provides a method or industrial process to produce enriched beet pulp through the partial extraction of sugar from cossettes as shown in FIGS. 1- 3A and 3B.

The partial extraction of sugar from the sugarbeet, resulting in "diffused cossettes" in which the sugar content has not been exhausted as compared to exhausted cossettes, has several key process benefits:
- The retention time of the cossettes in the diffuser is reduced meaning a potential increase in throughput and / or a reduction in fresh water make up to the diffuser (so-called draft) meaning less water will be required to be evaporated;
- Reduced extraction in diffusion leads to an increase in diffused cossettes tonnes to pulp presses (wet pulp) and an increase in sugar and non-sugar tonnes in diffused cossettes (wet pulp):
- Increased diffused cossettes and sugar content means there is reduced raw juice flow, less water and non-sugars in raw juice and increased pressed pulp sugar content and production - the Enriched Pressed Pulp product;
- Reduced raw juice flow and non-sugars results in fewer impurities to be removed meaning reduced lime inputs for purification and also reduced thin juice flow to the evaporation process;
- Reduced thin juice flow and non-sugars means there is less water to evaporate - this has the direct result of reducing energy input and costs.

In one embodiment, the Enriched Pressed Pulp product according to the invention has the properties listed in Table 1 as compared to the output in a conventional sugarbeet process.

**Table 1**

| **Composition by weight in sugarbeet, wet pulp, pressed pulp and dried pulp** (% in w/w) | | | | | |
|---|---|---|---|---|---|
| | **Sugarbeet** | **Conventional Wet Pulp** | **Conventional Pressed Pulp** | **Conventional Dried Pulp** | **Enriched Pressed Pulp** |
| **Dry matter** | 20-30 | 5 - 10 | 20-30 | 85 - 95 | 20-30 |
| **Water** | 70-80 | 90 - 95 | 70 - 80 | 10 - 15 | 70 -80 |
| **Sugar** | 10-20 | 1 | 1-2 | 4-5 | 4-18 |
| **Non-sugar components** | 10 - 15 | 4 -9 | 18-28 | 80 - 85 | 10-20 |

All percentages presented herein are on a weight basis, identified as % or % w/w, unless otherwise indicated. The dry matter content of the crop, sometimes referred to as "DM", comprises the non-water content of the crop. The term "sugar" refers to sucrose, saccharose, and any other nutritive disaccharide present in the crop. "Non-sugar components" include the fiber and protein present in the crop.

The present invention has the following inventive motivation and resulting advantages. Farmers gain access to a new source of high-energy, sugar-based feedstock product. It has been proven that sugar-rich diets for dairy livestock will trigger higher milk solids, and creameries pay farmers a premium based on milk solids content. Sugar production factories may open up a new "premium" feedstock market segment.

The new type of feedstock is easy to use for the livestock farmer yet offers the full advantages of sugarbeet feeding. Scientific experiments have shown that feeding ensiled or fresh beet leads to significant improvements in milk quality especially in terms of fat content. The present invention offers the livestock farmer an enriched sugarbeet feedstock that has an improved nutritive content and yet is easier to use as compared to conventional *Beta vulgaris-*based feedstock products.

At the same time, the invention offers the sugar factories or other processing facilities a swing capacity option to buffer volatility and quickly respond to changing market needs. Swing capacity means the same asset can "swing" its processes into different products (i.e. adjust diffusion conditions to produce more or less sugar and/or enriched beet pulp) to exploit high value markets. Different territories may be interested in different swing capacity options. An example of swing capacity is the Brazilian sugar industry and their admired swing capacity for production of ethanol and/or sugar.

According to the present invention, it is possible to increase the amount of sugarbeet entering the factory to deliver the same sugar output but with increased enriched pressed pulp production. This increase would not require investment in diffusion, purification or evaporation capacity. On the other hand, with increased beet entering the factory, benefits in purification and evaporation from reduced non-sugars and water can be still achieved. Increased sugarbeet input means that the factory can maintain sugar output and increase animal feedstock output so can always be operating efficiently.

Another aspect of the invention is to enable the sugar factories or other processing facilities to use *Beta vulgaris* plants or parts thereof or *Beta vulgaris* varieties or parts thereof having various sugar content and impurity content levels. As used herein, "impurity" and "impurities" refer to non-sugar nutrients present in the crop. For example, some varieties, while having a desired DM content or sugar content, may include higher levels of impurities such as non-sugar nutrients, crude protein or other components as compared to varieties with lower levels of impurities. Such varieties can be processed in accordance with the invention to produce a high protein feedstuff, which may serve to enhance the nutrient content of the milk produced by animals that consume the feedstuff. This aspect of the invention enables the use of a broader range of *Beta vulgaris* varieties that can produce a nutritional source of protein, which may be non-GMO protein, in the enriched feedstock for use in the dairy and other industries.

### EXAMPLES

### Example 1

In Example 1, the same amount of sugarbeet was processed through a conventional production system (the "Current diffusion model) as well as a system in accordance with the present invention (the "Enriched pulp diffusion model"). The data are summarized in Tables IIa and IIb.

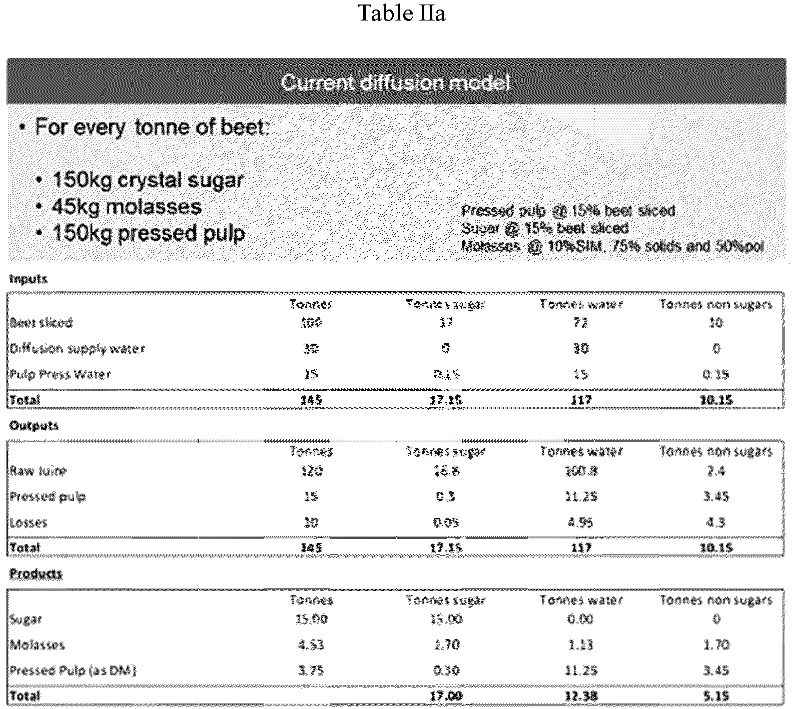

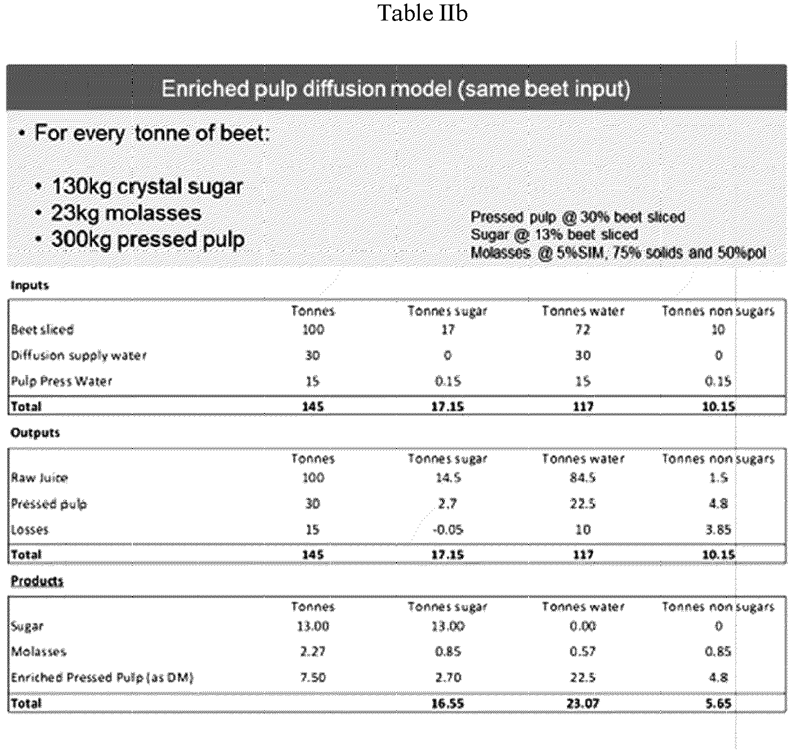

### Example 2

In Example 2, the sugarbeet input was increased in the Enriched pulp diffusion model system in accordance with the present invention as compared to the conventional production system. The data are shown in Tables IIIa and IIIb.

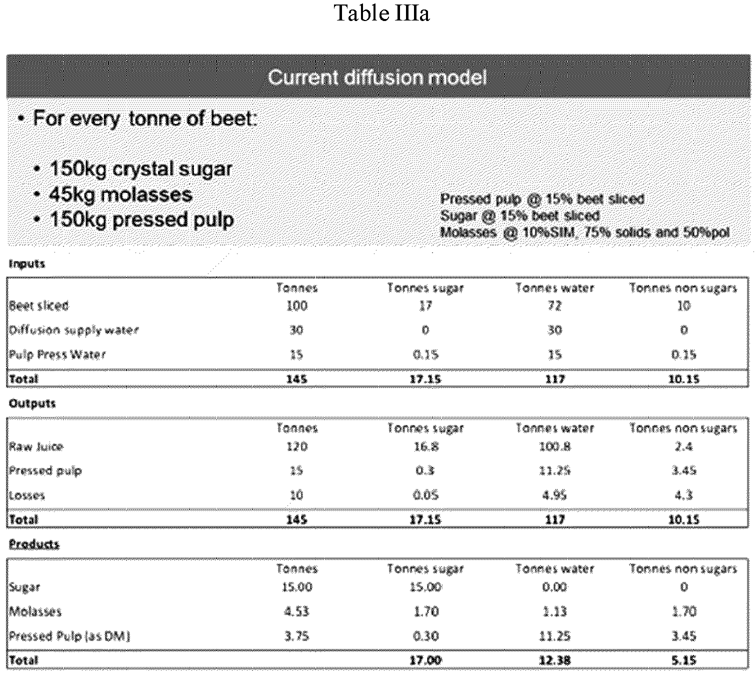

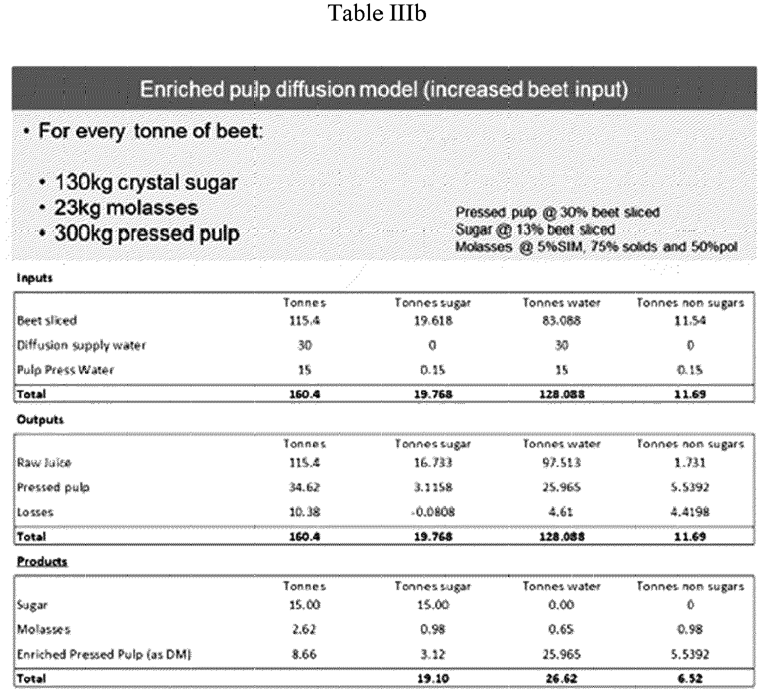

While several possible embodiments are disclosed above, embodiments of the present invention are not so limited. These exemplary embodiments are not intended to be exhaustive or to unnecessarily limit the scope of the invention, but instead were chosen and described in order to explain the principles of the present invention so that others skilled in the art may practice the invention. Indeed, various modifications of the invention in addition to those described herein will become apparent to those skilled in the art from the foregoing description. Such modifications are intended to fall within the scope of the appended claims.

## Claims

1. A process for making an animal feedstuff composition comprising the steps of:
a. providing a crop comprising Beta vulgaris plants or parts thereof having a dry matter content greater than about 18% by weight;
b. cutting the crop into pieces;
c. conveying the pieces into a diffusion apparatus to produce a fluid and a pulp, said pulp comprising sugar at about 20-60% by weight of the dry matter of the pulp;
d. removing the pulp from the diffusion apparatus;
e. processing the pulp to form the feedstuff composition.
optionally further comprising the step of analyzing the crop to determine a sugar concentration of the crop, preferably wherein the sugar concentration of the crop is determined after cutting the crop into pieces;
optionally further after removing the pulp from the diffusion apparatus, the pulp is pressed to form a pressed pulp, preferably wherein the pressed pulp is dried to form a dried pulp, more preferably the dried pulp is pelletized and/or the dried pulp is in the form of shreds;
optionally further comprising the step of analyzing the pulp to determine a sugar concentration of the pulp.

2. The process of claim 1, wherein the sugar concentration of the crop and/or the pulp is determined by spectrometry, preferably wherein the spectrometry is performed by a spectroscopic method selected from the group consisting of: infrared spectroscopy; mid-infrared spectroscopy; near infrared spectroscopy; Raman spectroscopy; hyperspectral imaging; refractometry; polarimetry; and a combination thereof.

3. An animal feedstuff composition made by the process of claim 1 or 2.

4. The feedstuff composition of claim 3, wherein the dry matter content of the feedstuff composition is between about 5 and 95% by weight, or wherein the dry matter content of the feedstuff composition is between about 30 - 85% by weight.

5. The feedstuff composition of claim 3, wherein the sugar content of the feedstuff composition is between about 0 and 60% by weight, or wherein the sugar content of the feedstuff composition is between about 0 and 30% by weight.

6. The feedstuff composition of claim 3, further comprising a nutritional component, preferably wherein the nutritional component comprises a digestible fiber, more preferably wherein the digestible fiber comprises pectin.

7. A process for producing an enriched milk, comprising feeding the feedstuff of claim 3 to a milk-producing animal, and thereafter obtaining milk from the animal, preferably wherein the milk from the animal contains a higher nutrient content compared to a milk from an animal who has not been fed the feedstuff, wherein the higher nutrient content is selected from of the group consisting of: a higher fat content, a higher protein content, and a combination thereof.

8. An animal feedstuff composition comprising from about 5% to about 95% processed Beta vulgaris dry matter, wherein the dry matter comprises from about 0% to about 60% sugar, preferably wherein the dry matter further comprises from about 0% to about 100% by weight digestible fiber.

9. The feedstuff composition of claim 8, wherein the digestible fiber comprises from about 0% to about 100% by weight pectin, preferably wherein the ratio of the sugar to the pectin in the feedstuff composition ranges from about 1 to about 100% by weight.

10. A process of producing an enriched milk, comprising feeding the feedstuff of claim 8 to a milk-producing animal, and obtaining milk from the animal, preferably wherein the milk from the animal contains a higher nutrient content compared to a milk from an animal who has not been fed the feedstuff, wherein the higher nutrient content is selected from of the group consisting of: a higher fat content, a higher protein content, and a combination thereof.

11. A system for managing throughput in a production facility for processing a sugar-containing crop material, comprising;
a. a first detection apparatus to detect a dry matter content and sugar content of the crop material;
b. a second detection apparatus in communication with a fluid-based diffusion apparatus to detect a processed sugar content of the fluid within the diffusion apparatus when the crop material is in the diffusion apparatus, said diffusion apparatus having at least a plurality of operational modes;
c. a controller for controlling the operation of diffusion apparatus in each operational mode; and
d. a memory and processor configured to:
i. receive the dry matter content and the processed sugar content from the first and second detectors;
ii. compare the dry matter content and the processed sugar content;
iii. generate a comparison value;
iv. determine whether the comparison value meets a threshold processed sugar yield target; and
v. transmit a signal to the controller for maintaining or changing the operational mode of the diffusion apparatus based on the determination step (iv).

12. The system of claim 11, wherein the threshold processed sugar yield target is generated by a second processor, preferably wherein the second processor is configured to:
a. receive a weight input indicating the quantity of the crop material;
b. receive the dry matter content and sugar content from the first detection apparatus; and
c. determine the threshold processed sugar yield target based on the weight input and the dry matter content.

13. The system of claim 11 or 12, wherein the first detection apparatus comprises a measurement apparatus for measuring a raw sugar content of the crop material, preferably wherein the measurement apparatus uses spectrometry to measure the raw sugar content.

14. The system of claim 13, wherein the spectrometry is done by a spectroscopic method selected from the group consisting of: infrared spectroscopy; mid-infrared spectroscopy; near infrared spectroscopy; Raman spectroscopy; hyperspectral imaging; refractometry; polarimetry; and a combination thereof.

15. The system of claim 11, further comprising a third detection apparatus in communication with the diffusion apparatus to detect a crude protein content of a pulp formed from the crop material within the diffusion apparatus.
